# EUROPÄISCHE PATENTSCHRIFT

(11) **EP 3 847 479 B1**
(45) Veröffentlichungstag und Bekanntmachung des Hinweises auf die Patenterteilung: **06.08.2025**
(21) Anmeldenummer: 19732317.3
(22) Anmeldetag: 18.06.2019
(51) Int. Cl.: G01S 13/931, G01S 7/35, G01S 13/34, H01Q 3/26, H01Q 21/06, G01S 13/02

(54) **WINKELAUFLÖSENDER RADARSENSOR**
ANGLE-RESOLVING RADAR SENSOR
CAPTEUR RADAR À RÉSOLUTION ANGULAIRE

(30) Priorität: 04.09.2018 DE 102018214966
(43) Veröffentlichungstag der Anmeldung: 14.07.2021
(73) Patentinhaber: Robert Bosch GmbH, 70442 Stuttgart (DE)
(72) Erfinder: SCHOOR, Michael, 70195 Stuttgart (DE); MAYER, Marcel, 89173 Lonsee (DE)
(86) Internationale Anmeldenummer: PCT/EP2019/065959
(87) Internationale Veröffentlichungsnummer: WO 2020/048656

(56) Entgegenhaltungen:
- WO-A1-2018/122849
- DE-A1- 102007 034 276
- DE-A1- 102009 029 503
- DE-A1- 102015 222 884
- DE-A1- 102016 108 756
- US-A1- 2011 074 646

## Beschreibung

Die Erfindung betrifft einen winkelauflösenden Radarsensor mit einem Antennenarray, das eine Anzahl N > 2 von in einer Abtastrichtung gegeneinander versetzten Antennenelementen aufweist und dessen Apertur A in Einheiten der Wellenlänge λ größer ist als (N-1)/2, einer digitalen Strahlformungseinrichtung, und einer Winkelschätzeinrichtung, die für eine Winkelschätzung auf der Basis des Signals der Strahlformungseinrichtung ausgebildet ist.

### Stand der Technik

Radarsensoren werden in Kraftfahrzeugen beispielsweise zur Messung der Abstände, Relativgeschwindigkeiten und Azimutwinkel von im Vorfeld des eigenen Fahrzeugs georteten Fahrzeugen oder sonstigen Objekten eingesetzt. Die einzelnen Antennenelemente sind dann beispielsweise in Abstand zueinander auf einer Horizontalen angeordnet, so dass unterschiedliche Azimutwinkel der georteten Objekte zu Differenzen in den Lauflängen führen, die die Radarsignale vom Objekt bis zum jeweiligen Antennenelement zurückzulegen haben. Diese Lauflängendifferenzen führen zu entsprechenden Unterschieden in der Phase der Signale, die von den Antennenelementen empfangen und in den zugehörigen Auswertungskanälen ausgewertet werden. Durch Abgleich der in den verschiedenen Kanälen empfangenen (komplexen) Amplituden mit entsprechenden Amplituden in einem Antennendiagramm lässt sich dann der Einfallswinkel des Radarsignals und damit der Azimutwinkel des georteten Objekts bestimmen.

Auf analoge Weise können auch Elevationswinkel von Objekten gemessen werden. Die Abtastrichtung, in der die Antennenelemente gegeneinander versetzt wird, ist dann nicht die Horizontale, sondern die Vertikale.

Damit eine hohe Winkelauflösung erreicht wird, sollte die Apertur der Antenne möglichst groß sein. Wenn jedoch die Abstände zwischen den benachbarten Antennenelementen zu groß sind, können Mehrdeutigkeiten in der Winkelmessung auftreten, da man für Lauflängendifferenzen, die sich um ganzzahlige Vielfache der Wellenlänge λ unterscheiden, dieselben Phasenbeziehungen zwischen den empfangenen Signalen erhält. Eine eindeutige Winkelmessung lässt sich beispielsweise mit einer ULA-Struktur (Uniform Linear Array) erreichen, bei der die Antennenelemente in Abständen von λ/2 angeordnet sind.

Durch eine Prozedur, die als digitale Strahlformung bezeichnet wird, kann man die Hauptempfindlichkeitsrichtung des Antennenarrays modifizieren und damit gleichsam die Hauptempfangskeule des Radarsensors in eine bestimmte Richtung lenken, wobei allerdings beiderseits der Hauptempfangskeule auch Nebenkeulen mit einer gewissen Empfindlichkeit auftreten. Bei der digitalen Strahlformung werden die komplexen Amplituden, die von jedem einzelnen Antennenelement empfangen werden, mit einem winkelabhängigen komplexen Phasenfaktor gewichtet, der für den gegebenen Winkel dem Lauflängenunterschied der Radarstrahlung entspricht. Wenn auf diese Weise mehrere Strahlen mit unterschiedlichen Richtungswinkeln gebildet werden, so erhält man für jeden Strahl eine Gewinnfunktion, die für jeden Winkel den Antennengewinn angibt, der sich ergäbe, wenn sich das geortete Objekt bei dem betreffenden Winkel befände. Im Idealfall sollte man für ein Objekt, das sich bei einem bestimmten Winkel befindet, in jedem Strahl eine Signalstärke messen, die dem theoretischen Antennengewinn für diesen Strahl entspricht, und nur bei genau einem Winkel, nämlich dem Winkel, unter dem sich das Objekt tatsächlich befindet, sollten die gemessenen Amplituden die richtige Beziehung zueinander aufweisen.

In der Praxis sind jedoch die gemessenen Signale mehr oder weniger verrauscht, so dass der Ortungswinkel nur geschätzt werden kann, indem man den Winkel aufsucht, für den die in den verschiedenen Strahlen gemessenen Amplituden am besten mit den theoretischen Werten korrelieren. Diese Korrelation kann beispielsweise durch eine sogenannte DML-Funktion (Deterministic Maximum Likelihood Funktion) ausgedrückt werden, und die Winkelschätzung besteht dann darin, dass man das Maximum der DML-Funktion aufsucht.

Wenn die Apertur des Antennenarrays vergrößert wird, um eine höhere Winkelauflösung zu erreichen, und wenn die Messung dennoch eindeutig bleiben soll, so muss die Anzahl der Antennenelemente erhöht werden. Damit nimmt jedoch auch die Anzahl der erforderlichen Auswertungskanäle zu, so dass die erforderliche Rechenleistung und damit die Hardwarekosten zunehmen.

Aus WO2013/056880 A1 ist ein Radarsensor bekannt, bei dem mit ausgedünnten Antennenarrays gearbeitet wird, bei denen zumindest für einige der Paare von benachbarten Antennenelementen die Abstände vergrößert sind, so dass man bei gegebener Anzahl von Auswertungskanälen eine größere Apertur erreicht. Die Eindeutigkeit der Winkelmessung wird dann dadurch wiederhergestellt, dass abwechselnd mit verschiedenen Kombinationen von Antennenelementen gemessen wird, wodurch die Lücken im Antennenarray aufgefüllt werden.

Aus DE 10 2016 108 756 A1 ist ein Radarsensor der eingangs genannten Art bekannt. Offenbarung der Erfindung

Anspruch 1 definiert die Erfindung. Aufgabe der Erfindung ist es, einen winkelauflösenden Radarsensor zu schaffen, mit dem eine hochauflösende eindeutige Winkelmessung bei verringertem Rechenaufwand für die Signalauswertung möglich ist.

Diese Aufgabe wird erfindungsgemäß dadurch gelöst, dass die Mittenabstände zwischen den benachbarten Antennenelementen voneinander verschieden sind, jedoch um nicht mehr als 25 % von dem Wert A / (N-1) abweichen.

Da die Apertur größer ist als (N-1)/2, können im Prinzip Mehrdeutigkeiten bei der Winkelschätzung auftreten. In der DML-Funktion für ein ULA äußert sich dies darin, dass die Funktion mehrere gleich hohe Maxima bei unterschiedlichen Winkeln aufweist. Dadurch, dass erfindungsgemäß die Antennenelemente nicht exakt in gleichmäßigen Abständen angeordnet werden, sondern die Abstände von Paar zu Paar etwas voneinander abweichen, werden in der DML-Funktion alle Maxima bis auf eines in der Höhe reduziert, so dass die Funktion wieder ein eindeutiges absolutes Maximum aufweist und somit eine eindeutige Winkelschätzung möglich ist. Die Abweichung der Antennenabstände von dem Wert A / (N-1), der dem Abstand bei einem ULA entspräche, wird jedoch so begrenzt, dass zur digitalen Strahlformung nach wie vor die gleichen Techniken eingesetzt werden können wie bei einem ULA und die Nebenkeulen ausreichend gedämpft werden. Insbesondere kann die digitale Strahlformung auf besonders effiziente Weise durch eine schnelle Fouriertransformation (FFT) erfolgen.

Der erfindungsgemäße Radarsensor weist somit anstelle eines ULA ein quasi-regelmäßiges Array auf, bei dem die Abweichungen von einem perfekten ULA gerade so groß sind, dass in Anbetracht des zu erwartenden Rauschpegels noch eine eindeutige Winkelschätzung möglich ist. Das "vorbestimmte Maß", um das die Abstände der Antennenelemente maximal von dem ULA-Wert A / (N-1) abweichen dürfen, wird dabei so gewählt, dass einerseits eine ausreichende Robustheit gegenüber dem Signalrauschen erreicht wird, andererseits jedoch die winkelabhängigen Gewinnfunktionen gegenüber einem ULA nicht zu stark verzerrt sind.

Vorteilhafte Ausgestaltungen und Weiterbildungen der Erfindung sind in den Unteransprüchen angegeben.

In einer Ausführungsform sind die Abweichungen der Mittenabstände zwischen den Antennenelementen von dem Wert A / (N-1) kleiner als 15%.

Die Abweichungen der Abstände zwischen den verschiedenen Paaren von benachbarten Antennenelementen können dabei ihrerseits regelmäßig variieren, beispielsweise gemäß einer linearen Funktion, einer quadratischen Funktion oder auch gemäß einem Polynom höheren Grades oder beispielsweise gemäß einer Sinusfunktion. Die Anzahl N der Antennenelemente des Arrays ist vorzugsweise eine Zweierpotenz, also beispielsweise N = 8 oder N = 16, wodurch eine effiziente digitale Strahlformung mittels FFT ermöglicht wird.

Im folgenden wird ein Ausführungsbeispiel anhand der Zeichnung näher erläutert.

Es zeigen:
- Fig. 1: ein Blockdiagramm eines erfindungsgemäßen Radarsensors mit einem quasi-regelmäßigen Antennenarray;
- Fig. 2: eine Darstellung eines regelmäßigen Antennenarrays (ULA) eines herkömmlichen Radarsensors;
- Fig. 3: Gewinnverteilungsfunktionen für verschiedene Strahlen, die mittels digitaler Strahlformung mit dem Antennenarray nach Fig. 2 gebildet wurden,
- Fig. 4: ein vereinfachtes Diagramm analog zu Fig. 3, in dem aus Gründen der Übersichtlichkeit nur die Gewinnfunktionen für zwei Strahlen dargestellt sind;
- Fig. 5: eine DML-Funktion für das Antennenarray nach Fig. 2;
- Fig. 6: ein Beispiel eines ULA mit vergrößerter Apertur;
- Fig. 7: ein Diagramm zweier Gewinnfunktionen, analog zu Fig. 4, jedoch für das Array nach Fig. 6;
- Fig. 8: eine DML-Funktion für das Array nach Fig. 6;
- Fig. 9: ein Diagramm zweier Gewinnfunktionen, analog zu Figuren 4 und 7, jedoch für das erfindungsgemäße Array nach Fig. 1; und
- Fig. 10: eine DML-Funktion für das Array nach Fig. 1.

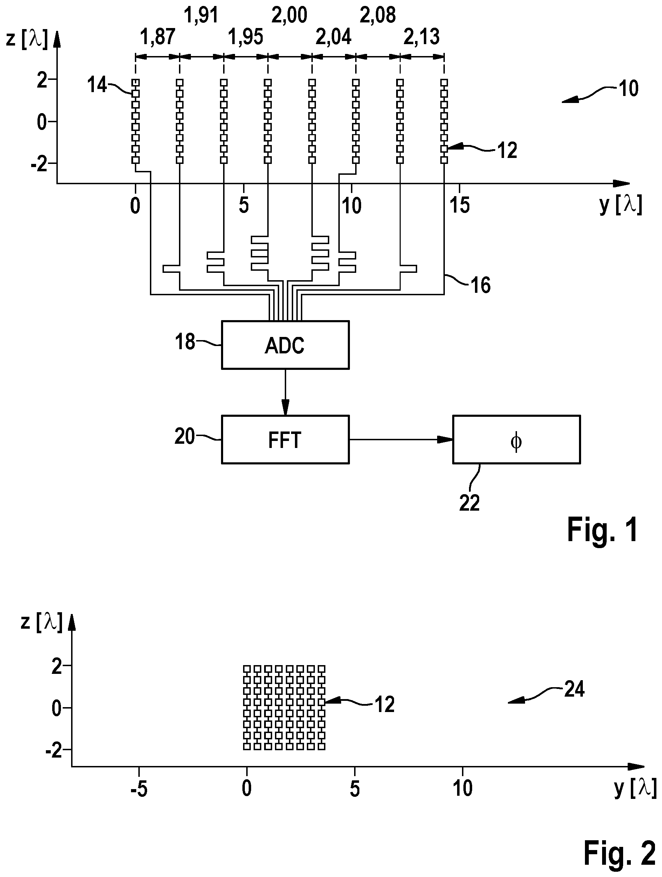

In Fig. 1 ist in Diagrammform ein Radarsensor mit einem quasi-regelmäßigen Antennenarray 10 mit acht Antennenelementen 12 gezeigt. Jedes Antennenelement 12 wird durch eine Spalte aus acht seriell gespeisten Antennenpatches 14 gebildet, die sich in vertikaler Richtung z erstreckt. Die spaltenförmigen Antennenelemente 12 sind in einer Reihe in einer Abtastrichtung y angeordnet, die bei einem Radarsensor für Kraftfahrzeuge der horizontalen Querrichtung des Fahrzeugs entspricht, so dass der Radarsensor ein Winkelauslösungsvermögen im Azimut hat. Die Abstände zwischen den Antennenelementen 12 wie auch die Abstände zwischen den einzelnen Antennenpatches 14 jeder Spalte sind in Einheiten der Wellenlänge λ der Radarstrahlung angegeben. Die Abstände zwischen den paarweise benachbarten Antennenelementen 12 sind in Fig. 1 auch quantitativ angegeben und haben jeweils annäherd den Wert 2, jedoch mit Abweichungen von weniger als 7 % von dem Mittelwert 2,00.

Die Breite des Antennenarrays 10 in der Abtastrichtung y beträgt annähernd 14 λ, so dass das Array im Azimut die Apertur A = 14 hat. Allgemein ist der Mittelwert (2,00 in diesem Beispiel) der Abstände zwischen den Antennenelementen 12 gleich A / (N-1), wenn N die Anzahl der Antennenelemente 12 in dem Array ist.

Im gezeigten Beispiel nehmen die Abstände zwischen den Paaren von Antennenelementen 12 linear von 1,87 auf 2,13 zu.

Die acht Antennenelemente 12 sind über jeweilige Signalleitungen 16 mit einer Auswerteschaltung 18 verbunden, in der die empfangenen Signale in getrennten Empfangskanälen ausgewertet werden. Beispielsweise kann es sich bei dem hier gezeigten Radarsensor um ein FMCW-Radar (Frequency Modulated Continuous Wave) handeln. Jeder Auswertungskanal enthält dann einen Mischer, in dem das von dem Antennenelement empfangene Signal mit einem Anteil des gesendeten Radarsignals gemischt wird, so dass man ein Zwischenfrequenzsignal enthält, dessen Frequenz einerseits von der Laufzeit des Radarsignals vom Radarsensor zum Objekt und zurück und andererseits von der Relativgeschwindigkeit des Objekts abhängig ist. Die Zwischenfrequenzsignale werden in der Auswerteschaltung 18 digitalisiert und jeweils über eine gewisse Samplingperiode aufgezeichnet, in der die Frequenz des gesendeten Signals rampenförmig moduliert wird. Anhand der Frequenzen der Zwischenfrequenzsignale, die auf mehreren Modulationsrampen mit unterschiedlicher Rampensteigung gewonnen werden, lassen sich dann in bekannter Weise die Abstände und Relativgeschwindigkeiten der georteten Objekte bestimmen.

Die Signalleitungen 16, die die Antennenelemente mit der Auswerteschaltung 18 verbinden, sind so gestaltet, dass sie alle die gleiche Länge haben, so dass die Phasenbeziehungen zwischen den Signalen auf dem Weg zur Auswerteschaltung 18 nicht verfälscht werden. Durch Vergleich der Amplituden und Phasen (also der komplexen Amplituden) der in den acht Empfangskanälen empfangenen Signale lässt sich dann für jedes Objekt, das bei einem bestimmten Abstand und einer bestimmten Relativgeschwindigkeit geortet wird, der Winkel (Azimutwinkel) bestimmen, der die Richtung vom Radarsensor zum Objekt angibt. Dazu werden die in den acht Empfangskanälen empfangenen Signale in einem Strahlformer 20 einer digitalen Strahlformung unterzogen, beispielsweise mittels schneller Fouriertransformation (FFT). Die Ergebnisse der Strahlformung werden an eine Winkelschätzeinrichtung 22 übermittelt, wo mit Hilfe einer Maximum-Likelihood-Schätzung der Azimutwinkel ϕ des georteten Objekts bestimmt wird.

Zur Erläuterung der Wirkungsweise der Erfindung soll zunächst ein voll aufgefülltes regelmäßiges Antennenarray 24 (ULA) betrachtet werden, wie es in herkömmlichen Radarsensoren verwendet wird und wie es in Diagrammform in Fig. 2 gezeigt ist. Der Abstand zwischen den benachbarten Antennenelementen 12 beträgt bei diesem Array einheitlich λ/2, so dass die Eindeutigkeitsbedingung erfüllt ist. Allerdings hat dieses Array - bei acht Empfangskanälen - nur eine Apertur A = 3,5, so dass das Winkelauflösungsvermögen deutlich eingeschränkt ist.

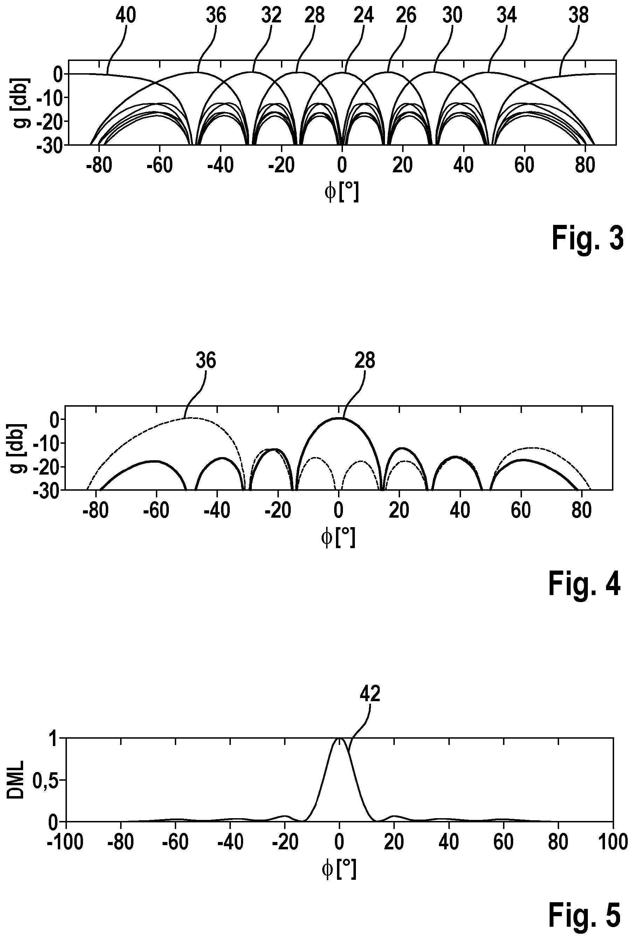

Fig. 3 ist ein Diagramm, in dem für das Antennenarray 24 nach Fig. 2 der Antennengewinn der Strahlformungseinrichtung 20 als Funktion des Azimutwinkels ϕ dargestellt ist. Im einzelnen zeigt das Diagramm die Graphen von normierten Gewinnfunktionen 28 - 40 für zehn Empfangsstrahlen, deren Empfindlichkeitsmaxima bei 0°, +/-15°, +/-30°, +/-45° und jenseits von +/-60° liegen. Jeder Strahl hat eine Hauptkeule mit maximalem Gewinn und eine Vielzahl von Nebenkeulen, die mit etwa 13 dB gedämpft sind. Dieses Diagramm beruht auf einer Strahlformung mittels FFT mit einem Rechteckfenster.

Aus Gründen der Deutlichkeit sind in Fig. 4 die Graphen der Gewinnfunktionen 30 und 36 noch einmal isoliert dargestellt. Der Graph der Gewinnfunktion 30 ist in fetten Linien eingezeichnet, während der Graph der Gewinnfunktion 36 gestrichelt eingezeichnet ist. Man erkennt, dass die Gewinnfunktion 30 mit dem Maximum bei 0° symmetrische Nebenkeulen hat, während die Gewinnfunktion für den Strahl mit dem Empfindlichkeitsmaximum bei -45° asymmetrisch ist.

Bei der digitalen Strahlformung wird aus den komplexen Amplituden der in den acht Antennenelementen 12 empfangenen Signale eine gewichtete Summe gebildet, mit komplexen Gewichtsfaktoren, die den Lauflängenunterschied von Antennenelement zu Antennenelement wiederspiegeln. Da diese Lauflängenunterschiede vom Azimutwinkel ϕ abhängig sind, erhält man für jeden Strahl (mit einem Empfindlichkeitsmaximum bei einem bestimmten Azimutwinkel ) einen anderen Satz von Gewichtsfaktoren. Wenn ein Objekt unter einem gegebenen Azimutwinkel ϕ geortet wird, so erhält man in dem Strahl mit dem Empfindlichkeitsmaximum bei 0° ein Signal, dessen Intensität proportional zu der Gewinnfunktion 28 ist, während man für dasselbe Objekt in dem Strahl mit dem Empfindlichkeitsmaximum bei -45° ein Signal erhält, dass zu der Gewinnfunktion 36 proportional ist. Entsprechend erhält man auch für jeden der übrigen Strahlen einen Wert, der durch die zugehörige Gewinnfunktion gegeben ist.

Aus den unterschiedlichen Amplitudenwerten, die man nach Strahlformung für die verschiedenen Strahlen erhält, lässt sich auf den Azimutwinkel schließen, unter dem sich das geortete Objekt tatsächlich befindet. Dazu wird der Winkel aufgesucht, bei dem die gemessenen Werte am besten mit den durch die Gewinnfunktionen gegebenen Werten korrelieren.

Als Beispiel zeigt Fig. 5 eine DML-Funktion 42 (Deterministic Maximum Likelihood Funktion), auch als Winkelspektrum bezeichnet, für ein Ziel, das sich bei dem Azimutwinkel ϕ = 0° befindet. Die DML-Funktion 42 gibt für jeden Azimutwinkel ϕ die Korrelation zwischen den gemessenen Werten und den Gewinnfunktionen für die verschiedenen Strahlen an. Die Funktion ist so normiert, dass das Maximum den Wert 1 hat. Man erkennt, dass die DML-Funktion 42 nur ein einziges deutlich ausgeprägtes Maximum bei dem Winkel ϕ = 0° hat, unter dem sich das geortete Objekt befindet. Würde man stattdessen ein Signal von einem Objekt empfangen, das sich bei dem Winkel ϕ = 20° befindet, so wäre die DML-Funktion so verschoben, dass ihr Maximum bei 20° läge.

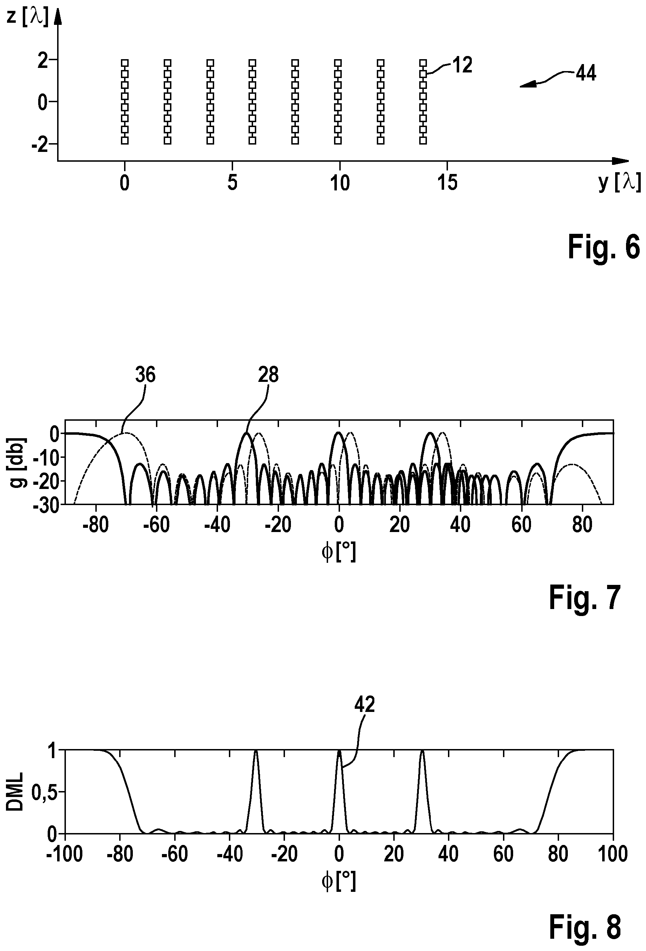

Um das Winkelauflösungsvermögen zu verbessern, werden nun bei den ULA 24 nach Fig. 2 die Abstände zwischen den Antennenelementen 12 auf 2λ vergrößert, jedoch ohne die Anzahl der Antennenelemente zu erhöhen. Man erhält dann ein ULA 44 mit der Apertur A = 14, wie es in Fig. 6 gezeigt ist.

Fig. 7 zeigt, wie sich diese Änderung auf die Gewinnfunktionen 28 - 40 auswirkt. Ähnlich wie in Fig. 4 sind auch in Fig. 7 nur die Graphen für die Gewinnfunktion 28 und 36 gezeigt. Man erkennt, dass diese Gewinnfunktionen jeweils mehrere etwa gleich hohe Maxima haben. Beispielsweise hat die Gewinnfunktion 28 ein Maximum bei 0° (wie in Fig. 4), aber weitere gleich hohe Maxima bei +/- 30°. Dazwischen liegt jeweils eine größere Anzahl stärker gedämpfter Nebenkeulen. Das gleiche gilt entsprechend auch für die Gewinnfunktion 36 sowie für jede andere (in fig. 7 nicht gezeigte) Gewinnfunktion.

Die DML-Funktion 42 für das ULA nach Fig. 6 ist in Fig 8 gezeigt. Auch diese Funktion hat jetzt mehrere gleich hohe Hauptmaxima, so dass eine eindeutige Winkelschätzung nicht mehr möglich ist.

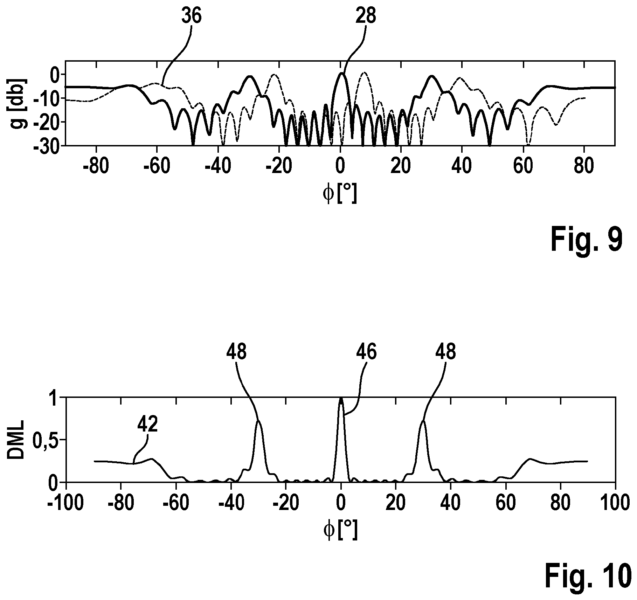

Verwendet man dagegen das quasi-regelmäßige Antennenarray 10 gemäß Fig. 1, so sind wieder eindeutige Winkelschätzungen möglich. Die Gewinnfunktionen 28 und 36 für dieses Array sind in Fig. 9 gezeigt. Ähnlich wie in Fig. 7 hat jede Gewinnfunktion im Winkelbereich von -50° bis +50° drei ausgeprägte Hauptmaxima, doch sind die Nebenkeulen hier stärker "angeschultert", d.h., die Nebenkeulen sind erhöht und näher an die Flanken der Hauptmaxima herangerückt.

Fig. 10 zeigt die zugehörige DML-Funktion 42. Da die Strahlformung in der Strahlformungseinrichtung 20 auf die gleiche Weise geschieht wie bei den ULAs nach Figuren 2 und 6, mit den gleichen Gewichtsfaktoren, aber die Abstände zwischen den benachbarten Antennenelementen 12 leicht ungleichförmig sind, bleibt nur ein Hauptmaximum 46 bei ϕ = 0° (im Fall eines Ziels bei 0°) in voller Höhe bestehen, während die flankierenden Maxima 48 bei +/-30° stärker unterdrückt sind. Das bedeutet, dass bei einer Winkelschätzung ein eindeutiges Maximum gefunden wird und somit eine eindeutige Winkelschätzung möglich ist.

Fehlerhafte Winkelschätzungen können allenfalls dann auftreten, wenn die Signale so stark verrauscht sind, dass die Unterschiede zwischen den Maxima 46 und 48 verwischt werden und eines der Maxima 48 den höchsten Wert hat und fälschlich zur Bestimmung des Azimutwinkels ausgewählt wird. Je ungleichförmiger die Abstände zwischen den benachbarten Antennenelementen 12 sind, desto stärker werden die Maxima 48 unterdrückt, und desto robuster ist die Winkelschätzung gegenüber dem Signalrauschen. Andererseits werden jedoch bei zunehmender Ungleichförmigkeit des Arrays die Nebenkeulen immer ausgeprägter. Bei geeigneter Wahl der Ungleichförmigkeit der Abstände zwischen den Antennenelementen 12 lässt sich jedoch erreichen, dass bei dem üblicherweise vorhandenen Signalrauschen eine eindeutige Winkelschätzung möglich ist und aufgrund der vergrößerten Apertur eine höhere Winkelauflösung erreicht wird, ohne dass zusätzliche Auswertungskanäle benötigt werden.

## Patentansprüche

1. Winkelauflösender Radarsensor mit einem Antennenarray (10), das eine Anzahl N > 2 von in einer Abtastrichtung (y) gegeneinander versetzten Antennenelementen (12) aufweist und dessen Apertur A in Einheiten der Wellenlänge λ größer ist als (N-1)/2, einer digitalen Strahlformungseinrichtung (20), und einer Winkelschätzeinrichtung (22), die für eine Winkelschätzung auf der Basis des Signals der Strahlformungseinrichtung (20) ausgebildet ist, wobei die Mittenabstände zwischen den benachbarten Antennenelementen (12) voneinander verschieden sind, jedoch um nicht mehr als 25 % von dem Wert A / (N-1) abweichen.

2. Radarsensor nach Anspruch 1, bei dem die Abstände für die benachbarten Antennenelemente um nicht mehr als 15 % von dem Wert A / (N-1) abweichen.

3. Radarsensor nach Anspruch 1 oder 2, bei dem die Abstände zwischen den Antennenelementen (10) gemäß einem regelmäßigen Muster variieren.

4. Radarsensor nach Anspruch 3, bei dem die Abstände zwischen den Antennenelementen (12) gemäß einer Polynomfunktion variieren.

5. Radarsensor nach Anspruch 4, bei dem die Abstände zwischen den Antennenelementen (12) gemäß einer linearen Funktion variieren.

6. Radarsensor nach einem der vorstehenden Ansprüche, bei dem N eine Zweierpotenz ist.

7. Radarsensor nach einem der vorstehenden Ansprüche, bei dem A > 1 vorzugsweise A ≥ 2, Einheiten der Wellenlänge ist.

## Claims

1. Angle-resolving radar sensor having an antenna array (10), which has a number N > 2 of antenna elements (12) offset with respect to one another in a scanning direction (y) and the aperture A of which in units of the wavelength λ is greater than (N-1)/2, having a digital beam shaping device (20), and having an angle estimation device (22) designed to estimate an angle on the basis of the signal from the beam shaping device (20), wherein the centre-to-centre distances between the adjacent antenna elements (12) differ from one another, but do not differ by more than 25% of the value A/ (N-1).

2. Radar sensor according to Claim 1, in which the distances for the adjacent antenna elements do not differ by more than 15% of the value A/ (N-1).

3. Radar sensor according to Claim 1 or 2, in which the distances between the antenna elements (10) vary according to a regular pattern.

4. Radar sensor according to Claim 3, in which the distances between the antenna elements (12) vary according to a polynomial function.

5. Radar sensor according to Claim 4, in which the distances between the antenna elements (12) vary according to a linear function.

6. Radar sensor according to one of the preceding claims, in which N is a power of two.

7. Radar sensor according to one of the preceding claims, in which A > 1, preferably A ≥ 2, units of the wavelength.

## Revendications

1. Capteur radar à résolution angulaire comprenant un réseau d'antennes (10) qui comporte un nombre N > 2 d'éléments d'antenne (12) décalés les uns par rapport aux autres dans une direction de balayage (y) et dont l'ouverture A, exprimée en unités de longueur d'onde λ, est supérieure à (N-1)/2, un dispositif numérique de formation de faisceaux (20) et un dispositif d'estimation d'angle (22) qui est conçu pour une estimation d'angle sur la base du signal du dispositif de formation de faisceaux (20), les distances des centres entre les éléments d'antenne adjacents (12) étant différentes les unes des autres, mais ne s'écartant pas de plus de 25 % de la valeur A / (N-1).

2. Capteur radar selon la revendication 1, dans lequel les distances entre les éléments d'antenne adjacents ne s'écartent pas de plus de 15 % de la valeur A / (N-1).

3. Capteur radar selon la revendication 1 ou I2, dans lequel les distances entre les éléments d'antenne (10) varient selon un motif régulier.

4. Capteur radar selon la revendication 3, dans lequel les distances entre les éléments d'antenne (12) varient selon une fonction polynomiale.

5. Capteur radar selon la revendication 4, dans lequel les distances entre les éléments d'antenne (12) varient selon une fonction linéaire.

6. Capteur radar selon l'une des revendications précédentes, dans lequel N est une puissance de deux.

7. Capteur radar selon l'une des revendications précédentes, dans lequel A > 1, de préférence A ≥ 2, est exprimé en unités de longueur d'onde.
